(19) Europäisches Patentamt
European Patent Office
Office européen des brevets

(11) Publication number: **0 168 020**
**B1**

# (12) EUROPEAN PATENT SPECIFICATION

(45) Date of publication of patent specification: **18.10.89**

(51) Int. Cl.$^4$: **C 08 L 27/12,** C 08 J 3/24

(21) Application number: **85108467.3**

(22) Date of filing: **09.07.85**

## (54) Fluorinated thermoplastic elastomer compositions.

(30) Priority: **09.07.84 US 628987**
**04.06.85 US 739923**

(43) Date of publication of application:
**15.01.86 Bulletin 86/03**

(45) Publication of the grant of the patent:
**18.10.89 Bulletin 89/42**

(84) Designated Contracting States:
**BE DE FR GB IT NL SE**

(56) References cited:
**US-A-3 105 827**

**CHEMICAL ABSTRACTS, vol. 88, no. 16, 17th April 1978, page 34, no. 106255u, Columbus, Ohio, US**

**The file contains technical information submitted after the application was filed and not included in this specification**

(73) Proprietor: **E.I. DU PONT DE NEMOURS AND COMPANY**
**1007 Market Street**
**Wilmington Delaware 19898 (US)**

(72) Inventor: **Pazos, Jose Francisco**
**9495 Martin Road**
**Roswell Georgia 33076 (US)**
Inventor: **Rees, Richard Watkin**
**326 Hampton Road**
**Wilmington Delaware 19803 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

**EP 0 168 020 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the Invention

This invention relates to fluorinated thermoplastic elastomer compositions which contain two phases, namely a continuous fluorinated crystalline thermoplastic phase and a dispersed fluorinated amorphous elastomeric phase. The compositions may be produced by melt blending the fluorinated thermoplastic and an uncured fluorinated amorphous elastomeric polymer, and then dynamically curing the uncured fluorinated polymer to form elastomeric particles which are dispersed in the fluorinated thermoplastic. The compositions may also be produced by latex blending. The compositions of this invention have the highly desirable property of low compression set, that is when articles made of the composition are compressed for long periods of time even at high temperatures they have a strong tendency to return to their original size and shape. Another advantage of the compositions of the invention is that flash, or defective parts can be reprocessed without difficulty.

### Background of the Invention

Two-phase compositions of a continuous phase thermoplastic polymer and dispersed phase elastomer produced by dynamically curing the elastomer while it is dispersed in the thermoplastic are known. See for example, Coran et al. U.S. Patents 4,348,502, 4,130,535, 4,173,556, 4,207,404 and 4,409,365.

Fluorinated and partially fluorinated crystalline thermoplastics are high volume commercial products. Such plastics often contain large amounts of the polymerized monomer, tetrafluoroethylene. Likewise, fluorinated and partially fluorinated amorphous elastomers are known high volume commercial products. Such elastomers include the cured (vulcanized or crosslinked) copolymers of vinylidene fluoride with hexafluoropropylene and the like. Toughened blends of small quantities of a fluoroelastomer and a resinous fluorine-containing polymer such as chlorotrifluoroethylene and its resinous copolymers are described in U.S. Patent 3,105,827, but they are not crosslinked or elastomeric. Thermoplastic fluoroelastomers that contain two or more sequences of fluorinated or partially fluorinated crystalline blocks and fluoroelastomer blocks are known from U.S. Patent 4,158,678. Blends of these thermoplastic elastomers with liquid fluoroelastomers are known from later published (Art. 54(3)EPC) EP—A—132 834 but are not subjected to dynamic cure.

### Summary of the Invention

The present invention in a two-phase composition having a continuous phase consisting of a crystalline thermoplastic fluorocarbon resin, and a dispersed phase which consists of an amorphous cured (crosslinked or vulcanized) fluoroelastomer. The dispersed phase constitutes 50 to 90 percent by weight of the two phase composition.

The two-phase composition of the invention may be prepared by the process of the invention. The process of the invention comprises melt blending the thermoplastic crystalline fluorocarbon resin, and the uncured amorphous fluoroelastomer, at a temperature above the crystalline melting point of the resin, and then dynamically curing the elastomer. "Dynamically curing" means curing while the blend is undergoing mixing, stirring and shear. The curing is carried out by introducing one or more curing agents or free radical sources to the melt blend, and maintaining the temperature at a high enough level that the elastomer crosslinks.

The compositions of this invention may be chopped into injection molding granules, and injection molded in a conventional injection molding machine. The compositions can also be compression molded, or extrusion molded.

### Detailed Description

The thermoplastic crystalline fluorocarbon resins useful in compositions of the present invention must be "melt-processable". By "melt-processable" we mean a polymer whose melt flow can be measured in an extrusion plastometer [ASTM D—1238, D—2116] at a temperature above the crystalline melting point of the polymer. Polytetrafluoroethylene cannot be processed by the usual methods of thermoplastic fabrication because of its viscoelastic properties, as described in ASTM D—1457. Polytetrafluoroethylene is not melt-processable. The thermoplastic crystalline fluorocarbon resin will contain a minimum of 38 percent by weight fluorine. Further the thermoplastic crystalline fluorocarbon resin should be melt-processable at a temperature below that at which degradation of the amorphous fluorocarbon elastomer occurs to any significant degree. The thermoplastic crystalline fluorocarbon resins useful in the compositions of this invention include (a) copolymers of tetrafluoroethylene and ethylene, copolymers of tetrafluoroethylene and hexafluoropropylene, copolymers of tetrafluoroethylene and perfluoro(propyl vinyl ether) and copolymers of tetrafluoroethylene and perfluorobutyl ethylene, (b) homopolymers of vinylidene fluoride as well as copolymers of vinylidene fluoride in which the vinylidene fluoride is the greatly predominant polymerized monomer, (c) copolymers of chlorotrifluoroethylene with ethylene or halogenated monomers. Such polymers are well known in the art and many are commercially available.

The elastomeric components of the compositions of this invention are also well known in the art and most are commercially available. Suitable elastomeric components include, copolymers of vinylidene fluoride and hexafluoropropylene, terpolymers of tetrafluoropropylene, vinylidene fluoride and

hexafluoropropylene, terpolymers of hexafluoropropylene, vinylidene fluoride and bromotetrafluorobutene-1, polymers of tetrafluoroethylene, vinylidene fluoride, hexafluoropropylene, bromotetrafluorobutene-1, and trimethylallylisocyanurate, also known as 1,3,5-trimethallyl-1,3,5-triazine-2,4,6-(-H, 3H, 5H)-trione; terpolymers of hexafluoropropylene, vinylidene fluoride and iodotetrafluorobutene-1, and terpolymers of tetrafluoroethylene perfluoromethyl perfluorovinyl ether and

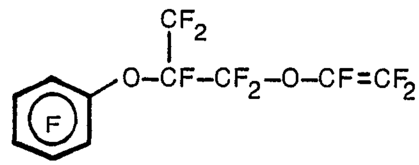

Such elastomers usually have molecular weights (prior to curing) such that they have a Mooney viscosity of 30 to 200 [ML—10 at 100°C]. The elastomeric component of the composition of the present invention will contain a minimum of 58 percent by weight fluorine.

The elastomer phase of the composition of the invention may be cured with conventional curing systems known for curing fluoroelastomers, such as combinations of (a) magnesium oxide, Bisphenol AF and organophosphonium salts; (b) magnesium oxide, the dipotassium salt of Bisphenol AF and dicyclohexyl 18 Crown 6 (c) 2,5-dimethyl-2,5-di*tert*butylperoxyhexyne-3 (sold as Luperco® 130 XL—45% active ingredient on a solid support) with meta phenylenebismaleimide or triallyl isocyanurate, (d) cumene hydroperoxide and maleimide or 1,3,5-triallyl-1,3,5-triazine-2,4,6-(1H,3H,5H)-trione; also known as triallyl isocyanurate.

The compositions of the invention contain 50 to 90 percent by weight of the cured elastomeric component, preferably 60 to 80 percent by weight, the remaining portion of the composition being the thermoplastic crystalline fluorocarbon resin. The composition of the invention may contain fillers, antioxidants, stabilizers, pigments and processing aids in amounts conventionally added to fluorocarbon thermoplastics of the art.

The particle size of dispersed phase of the compositions of the invention covers a wide range, and depends among other things on the processing conditions under which the compositions were prepared, the amount of each component in the compositions, the viscosity of each component in the composition. In general more desirable physical properties are obtained with the compositions of the invention having greater than 50 percent of the weight of the elastomeric particles smaller than about 3 micrometers.

A preferred method of preparing the compositions of the invention is by mixing the components in a extruder or mixer at a temperature above the crystalline melting point of the crystalline component, and then adding the curing agent while continuing the mixing. The temperature of the mixture after the addition of the curing agent may be increased to speed up the reaction. The mixture may be removed from the mixing device prior to completion of the curing reaction if desired, provided the temperature is maintained at a level sufficiently high to complete the curing reactions. The mixing of the components is best carried out at temperatures above 200°C, and the curing is best carried out at above 250°C.

The compositions of the invention may also be prepared by mixing a latex of the elastomeric component containing the selected curing agent with a suspension of the thermoplastic component. The polymer suspension is then filtered out dried and cured. The curing may take place during molding if desired.

In the following examples which illustrate the invention, all parts and percentages are by weight unless otherwise specified.

## Examples 1—9

Details of formulations and properties are provided in Table 1.

### Procedure for Examples 1 to 7

The amorphous elastomer (designated 1 in Table 1) employed was a commercial high viscosity copolymer of vinylidene fluoride, 60%, and hexafluoropropylene 40%. The elastomer was charged to a Brabender Plastograph at about 200°C, 40 rpm rotor speed and masticated while the thermoplastic resin was added at 200—250°C. The temperature was then raised to 290—320°C, under nitrogen, and mastication continued at 90 rpm until an uniform melt was obtained. The temperature was then dropped to 290°C, while fillers (if any) and curing agents were added in the order listed in Table I. Mastication was continued at 290°—300°C for 15 mins. after the last ingredient was added. In Examples 2, 3, 5 and 7 the products became powder on the addition of magnesium oxide. The product was then removed from the mixer and placed in a tray for transfer to an air oven wherein it was heated at 235° to 245°C for 16 hours. The product could then be compression molded at 325°C into slabs from which specimens were die-cut for tensile and compression set tests. Tensile tests were run at 50.8 mm (2") per minute, 20°C (ASTM D638—77). Compression set conditions were 22 hours at 150°C, except for example 5 which was run at 100°C (ASTM D395, Type 2). In the melt flow test, the melt indexer temperature was 365°C and 5 minute cuts were taken. Flow rates were reported in grams/10 mins using a 10 Kg weight (ASTM 1238—73).

Procedure for Examples 8 and 9

The procedure for Examples 8 and 9 was similar to Examples 1 to 7 except that the curing was at 220°C, and the products were not heated during preparation above 250°C.

TABLE I
COMPOSITIONS CURED BY MgO-CURATIVES SYSTEM

| Example | | 1 | 2 | 3 | 4 | 5 | 6 | 7 | 8 | 9 |
|---|---|---|---|---|---|---|---|---|---|---|
| Amorphous elastomer | | 70 | 70 | 70 | 70 | 70 | 70 | 70 | 70 | 70 |
| *Thermoplastic | 1 | 30 | | 20 | 20 | | 20 | | | |
| " | 2 | | 30 | 10 | 10 | | | | | |
| " | 3 | | | | | 30 | 10 | | | |
| " | 4 | | | | | | | 30 | | |
| " | 5 | | | | | | | | 30 | |
| " | 6 | | | | | | | | | 30 |
| **Filler | 1 | 1.5 | | | 0.5 | | | | | |
| " | 2 | 0.5 | | | 0.5 | | | | | |
| ***Curing Agent | 1 | 2 | 2 | 2 | 2 | 2 | 2 | 2 | 2 | 2 |
| " " | 2 | 3 | 2 | 2 | 2 | 2 | 2 | 2 | 2 | 2 |
| MgO | | 3 | 3 | 2 | 2 | 2 | 3 | 2 | 2 | 2 |
| Shore A | | 83 | 75 | 78 | 82 | 76 | 77 | 85 | 90 | 88 |
| $T_B$ (MPa) | | 12.55 | 3.65 | 9.03 | 7.31 | 3.58 | 7.45 | 3.86 | 14.07 | 3.1 |
| (psi) | | (1820) | (530) | (1310) | (1060) | (520) | (1080) | (560) | (2040) | (450) |
| Elongation % | | 250 | 170 | 300 | 170 | 160 | 230 | 100 | 160 | 170 |
| Comp. Set at 150°C | | 0 | 32 | 4 | 2 | 10 | 0 | 49 | 11 | 0 |
| Melt Flow at 365°C (g/10 min) | | 0.88 | 30 | 0.7 | 0.5 | 0.3 | 0.22 | 1.8 | No flow at 260° | |

*Thermoplastic 1 77.6% tetrafluoroethylene, 3.4% perfluorobutyl ethylene, 19% ethylene
" 2 84% tetrafluoroethylene, 13% hexafluoropropylene
" 3 97% tetrafluoroethylene, 3% perfluoropropylvinylether
" 4 95% tetrafluoroethylene, 5% perfluorobutyl ethylene
" 5 Polyvinylidene fluoride
" 6 80% chlorotrifluoroethylene, 20% ethylene
**Filler 1 medium thermal carbon black
" 2 Polytetrafluoroethylene Powder
***Curing Agent 1 33% benzyl triphenyl phosphonium chloride + 64% copolymer of 60% vinylidene fluoride and 40% hexafluoropropylene
" " 2 50% Bisphenol AF + 50% copolymer of 60% vinylidene fluoride and 40% hexafluoropropylene

Examples 10—17

Procedure

The elastomer and the resin were masticated as in Examples 1—9 before adding the curatives at 90 rpm. The blend was cooled to 240—250°C before adding the curatives, and temperature taken back up to 300°C during the 15 minutes cure period. All samples were heated at 245°C for 16 hours to complete curing.

Examples 10—17 in Table II illustrate embodiments wherein a desirable combination of melt flow, tensile strength and some significant degree of recovery from compression at 100°C was achieved. In the peroxide crosslinked systems, a substantial content of a gel polymer such as thermoplastic 8 (Table II), appears to be highly desirable to obtain good compression set. Oil swell tests were carried out on the product of Example 16 at 150°C for 70 hours. The swell values were 0.6% in ASTM #2 oil and 9.4% in DOT 4 Brake Fluid.

Example 17 was run twice and the products converted to molding powder of 3.175 mm (1/8") size by molding into thick slabs and hand cutting. The molding powder, after dry blending, was fed to a 25.4 mm (1") plunger type molding machine with cylinder and nozzle temperatures at 350°C. Various objects including discs, bars and pocket combs were molded by injecting the melt into unheated V-block molds. Good mold filling was demonstrated. The discs were converted into seals by cutting appropriate sized holes.

TABLE II
COMPOSITIONS CURED BY PEROXIDE

| Example | | 10 | 11 | 12 | 13 | 14 | 15 | 16 | 17 |
|---|---|---|---|---|---|---|---|---|---|
| *Amorphous elastomer | 2 | 35 | 40 | 50 | 40 | 35 | | 35 | 35 |
| " | 3 | 35 | 40 | 30 | 40 | 35 | | 35 | 35 |
| " | 4 | | | | | | 70 | | |
| **Thermoplastic | 7 | 30 | 20 | 30 | 10 | | 30 | 30 | 30 |
| " | 8 | | | | 20 | | | | |
| " | 9 | | | | | 30 | | | |
| ***Filler | 1 | 1.4 | 1.6 | | 1.6 | 1.0 | | 1.4 | 0.5 |
| " | 2 | | | | | | | | 0.5 |
| ****Curing Agent | 3 | 2 | 2 | 2 | 2 | 2 | 2 | 2 | 2 |
| " " | 4 | | | | | | | 2 | |
| " " | 5 | 3 | 3 | 3 | 3 | 3 | 3 | 4 | 3 |
| " " | 6 | | 1 | | 1 | | | | |
| Shore A | | 79 | 73 | 77 | 77 | 78 | 78 | 80 | |
| $T_B$ (MPa) | | 7.5 | 5.1 | 6.9 | 8.69 | 6.9 | 6.9 | 8.41 | |
| (psi) | | (1090) | (740) | (1000) | (1260) | (1000) | (1000) | (1220) | |
| Comp. Set at 100°C | | 45 | 54 | 60 | 74 | 72 | 57 | 50 | |
| Melt Flow at 380°C | | 1.2 | 2.3 | 0.5 | 2.5 | 0.12 | 0.6 | 2.8 | |
| 2160 g (g/10 min) | | | | | | | | | |

| | | |
|---|---|---|
| *Amorphous Elastomer | 2 | is 35% vinylidene fluoride, 34.2% hexafluoropropylene, 29% tetrafluoroethylene, 1.8% bromotetrafluorobutene |
| " | 3 | is 44% vinylidine fluoride, 28.8% HFP, 26% tetrafluoroethylene, 0.8% bromotetrafluorobutene, 0.4% fluorinated triallyl cyanurate |
| " | 4 | is 35% vinylidene fluoride, 36% hexafluoropropylene, 29% tetrafluoroethylene, 0.9% iodotetrafluorobutene |
| **Thermoplastic | 7 | is 13% hexafluoropropylene, 87% tetrafluoroethylene |
| " | 8 | is 77.6% tetrafluoroethylene, 19% ethylene, 3.4% perfluorobutyl ethylene |
| " | 9 | is 97% tetrafluoroethylene, 3% perfluoropropyl vinyl ether |
| ***Filler | 1 | is medium thermal carbon black |
| " | 2 | is polytetrafluoroethylene powder |
| ****Curing Agent | 3 | is meta phenylene bis maleimide |
| " " | 4 | is triallyl isocyanurate |
| " " | 5 | is 2,5 dimethyl-2,5 ditertbutyl peroxybenzene-3, 45% active ingredient on solid support |
| " " | 6 | is cumene hydroperoxide |

Example 18

100 g of 19% solids latex of a copolymer of 25% tetrafluoroethylene, 45% vinylidene fluoride, and 30% hexafluoropropylene was stirred while adding 3.5 g of a 50% solids aqueous suspension of zinc oxide and 1.5 g of hexamethylene diamine carbamate. After stirring for 1 hour, the liquid was transferred to a Waring Blender and 40 g of a 19% solids suspension of thermoplastic 8 (Table II) in $CCl_2F—CClF_2$ was added. The mixture was blended for 5 minutes resulting in a polymer suspension. This was filtered, and the clear filtrate was discarded. The rubbery solid was vacuum dried at 100°C. A slab was then melt pressed at 290°C. It was almost white in color and exhibited good strength and resilience.

| | |
|---|---|
| Shore A Hardness | 88 |
| Ult. Tensile | 8.61 MPa (1250 psi) |
| Ult. Elongation | 290% |
| Melt Flow | 7 g/10 mins at 365°C |

Example 19
Blending in Extruder

The following rubber stock was prepared in a rubber mill at room temperature:

| | Parts |
|---|---|
| Copolymer of 25% Tetrafluoroethylene, 45% vinylidene fluoride, 30% hexafluoropropylene | 70 |
| MT Black | 5 |
| 33% benzyl triphenyl phosphonium chloride plus 67% copolymer of 60% vinylidene fluoride and 40% hexafluoropropylene | 1.5 |
| 50% Bisphenol AF and 50% copolymer of 60% vinylidine fluoride at 40% hexafluoropropylene | 2.5 |
| MgO | 2.0 |

The stock was cut into 3.175 mm (1/8") pellets and dryblended with 30 parts of thermoplastic 8 Table II. This blend was fed into a 30 mm Werner & Pfleiderer extruder, equipped with twin screws and kneading blocks and extrusion-blended at 60 rpm, with a melt temperature of 295—300°C. The extruded strand was quenched and cut into pellets suitable for molding.

Compression molding of the product were tough and resilient.

$T_B$: 14.7 MPa (2100 psi) $E_b$ 320%

Compression set: 3.5% after 22 hours at 150°C.

Example 20
Extrusion Process

Composition: 70/30 copolymer of vinylidene fluoride 60% and hexafluoropropylene 40% having a Mooney Viscosity of 150/thermoplastic 8. Table II, 5 medium thermal carbon black, 1.0 part 33% benzyl triphenyl phosphonium chloride, plus 67% of a copolymer of 60% vinylidene fluoride and 40% hexafluoropropylene, 1.25 50% Bisphenol AF plus 50% of a copolymer of 60% vinylidene fluoride and 40% hexafluoropropylene, 1.0 MgO. The curatives and the carbon black were milled into the vinylidene fluoride copolymer on cold mill. All the ingredients except the thermoplastic were ground 6 mm screen size and then dry blended with the thermoplastic before feeding to 28 mm Werner & Pfleiderer twin screw extruder, operating at 60 rpm.

| Feed | Zone 2 | Zone 3 | Zones 4, 5 | Die |
|---|---|---|---|---|
| 230—240°C | 240—280° | 280—290° | 285° | 280° |

The mixture melted at 295—300°C. The extrudate was quenched in water bath and pelletized.

The product fed to 0.17 kg (6 oz) screw injection molding machine. Test plaques 76.2 × 127.0 × 1.59 mm (3" × 5" × 1/16") were molded with melt at 290°—300°C and the mold at 60—90°C. Cycle: 20 secs injection, 60 secs hold, pressure at 8.4—9.8 MPa (1200—1400 psi). Well-filled moldings were obtained. The moldings could be re-pelletized and fed back into the machine without loss of melt flow.

Example 21

Seventy grams of perfluorinated elastomer having the composition 55.9% tetrafluoroethylene, 42.3% perfluoromethyl vinyl ether, 1.8% perfluoro phenoxy propyl vinyl ether was melted under a nitrogen blanket at 280°C and then 30 g of Teflon® 1000 fluorinated ethylene propylene copolymer added. A uniform melt was obtained at 320°C and then cooled to 250°C with the mixer used in Example 1 operating at 90 rpm. To this were added 2.8 g 2,5,8,15,18,21-hexaoxatricyclo[20.4.0,$0.^{9,14}$]hexacosane; 2.1 g

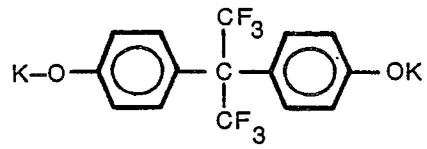

and 2.8 g, Maglite® D MgO. The temperature was raised to 310°C during 15 minutes mastication after addition of MgO. The partly crumbled product was heated at 245°C for 16 hours in an air oven. The dark brown color of the product lightened while being heated in the air oven. The product compression molded at 325°C to give a slab from which samples were die cut. The properties were $T_B$:16.55 MPa (2400 psi), $E_B$:260%, Shore A hardness: 83, 150°C compression set:45% and melt flow:0.42 g/10 minutes at 365°C.

Example 22

Sixty-three grams of the elastomer of Example 21 containing the following curatives and filler [all reported per hundred parts of elastomer] 4.0 parts 2,5,8,15,18,21-hexaoxatricyclo[20.4.0.$0^{9,14}$]hexacosane, 3.0 parts

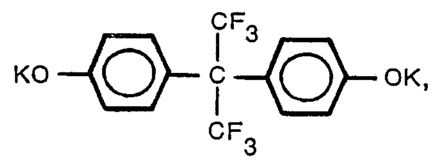

4.0 parts lead oxide, and 10.0 parts SAF carbon black, were added to 27 g Teflon® 100 fluorinated ethylene propylene copolymer in the mixer used in Example 1 at 300°C and mixed at 90 rpm for 15 minutes. The melt slowly crumbled as curing continued. The black product was heat treated in an air oven at 245°C for 16 hours. It compression molded easily at 325°C to form a slab which had the following properties: $T_B$:16.55 MPa (2400 psi), $E_B$:200%, Shore A hardness 87, 150°C compression set:24%, Melt flow:0.42 g/10 min. at 365°C.

Example 23

Sixty-six parts by weight of Aflas 150P uncured fluoroelastomer derived from 41 mole percent propylene and 59 mole percent tetrafluoroethylene having an inherent viscosity of 1 as measured from a 0.1 wt% solution in tetrahydrofuran at 30°C, 34 parts by weight of Kynar® 460 polyvinylidene fluoride resin having a melt flow of 3.4 g/10 mins measured at 265°C, and 13 parts by weight of MT Black carbon black were charged to a Brabender Plastograph and masticated at 190°C until a uniform blend was obtained. Two and three tenths parts by weight of sodium stearate, 5.7 parts by weight 1,3,5-triallyl-1,3,5-triazine-2,4,6-(1H,3H,5H)-trione, and 2.8 parts by weight m- and p-α,α'-bis(t-butylperoxy) diisopropyl benzene (40% active ingredient on inert clay) were added to the mixture and mastication continued at 190°C for 5 minutes. A sheet was compression molded at 200°C which sheet had the following properties: Compression set 22 hours/121°C = 60, $T_B$ = 1000 psi (6.9 MPa), $E_B$ = 45%, Perm. set = 4, Shore A Hardness = 86. The corresponding rubber and carbon black blend masticated at 190°C, but not cured, had the following properties: Compression Set 22 hrs/121°C = 100, $T_B$ = 550 psi (3.8 MPa), $E_B$ = 140%, Perm. set = 25, Shore A hardness = 84.

Example 24

Sixty-six parts by weight of the uncured elastomer used in Example 23 and 34 parts by weight of a crystalline fluoroplastic having the composition 77.6% tetrafluoroethylene, 19% ethylene, 3.4% perfluorobutyl ethylene and 13 parts by weight MT Black carbon black were charged to a Brabender Plastograph and masticated at 280°C until a uniform blend was obtained. Two and three tenths parts sodium stearate, 4.0 parts, 2,5-dimethyl-3,5-di-*tert*-butyl peroxyhexane (45% active ingredient on solid support) and 4.5 parts by weight m-phenylene-bis-maleimide were added to this mixture and mastication continued at 280°C for 5 minutes. The product was postcured for 1 hour at 180°C in an air oven and an additional hour at 200°C. A sheet was compression molded at 290°C which had the following properties: Compression Set 22 hours/150°C = 95; s/s, RT, 10"/min. $M_{100}$ 670; $T_B$ 680 psi (4.71 MPa); $E_B$ 160°; Perm. set = 66; Shore A hardness 78. The corresponding rubber and carbon black blend masticated at 280°C, but not cured, had the following properties: Compression set 22 hrs/150° = 100; s/s, RT, 25.4 cm/min.(10"/min.) $M_{100}$ = 380; $T_B$ = 170 psi (1.2 MPa); $E_B$ = 520%; Perm. Set. 180; Shore A hardness = 78.

## Claims

1. A two-phase composition having a continuous phase and a dispersed phase, the continuous phase consisting of a melt-processable crystalline thermoplastic fluorocarbon resin containing a minimum of 38 percent by weight fluorine, said dispersed phase consisting of an amorphous crosslinked (vulcanized) fluoroelastomer containing a minimum of 58 percent by weight fluorine, said dispersed phase constituting between 50 and 90 percent by weight of the two phase composition.

2. The composition of Claim 1 in which the crystalline thermoplastic fluorocarbon resin is selected from the class consisting of fully fluorinated or partially fluorinated thermoplastic resins.

3. The composition of Claim 2 in which the amorphous crosslinked fluorocarbon elastomer is selected from the class consisting of fully fluorinated or partially fluorinated fluoroelastomers.

4. A process for the preparation of the two-phase composition of Claim 1 which comprises (a) melt blending a melt-processable crystalline thermoplastic fluorocarbon resin containing a minimum of 38 percent by weight fluorine and an uncured amorphous fluoroelastomer containing a minimum of 58 percent by weight fluorine, (b) crosslinking the uncured fluoroelastomer by introducing one or more curing agents or free radical sources while continuing to mix, and maintaining a temperature that is above the crystalline melting point of the fluorocarbon resin and sufficiently high to cause crosslinking.

5. The process of Claim 4 in which a chemical curative is added to the melt blend at the beginning of the crosslinking step.

6. The process of Claim 4 in which the free radicals are generated during the crosslinking step.

7. The composition of Claim 1 in which the fluoroelastomer is vinylidene fluoride/hexafluoropropylene/tetrafluoroethylene.

8. The composition of Claim 7 in which the crystalline thermoplastic fluorocarbon resin is a tetrafluoroethylene/ethylene/perfluorobutyl ethylene.

## Patentansprüche

1. Zweiphasige Zusammensetzung mit einer kontinuierlichen Phase und einer dispergierten Phase, wobei die kontinuierliche Phase aus einem schmelzverarbeitbaren, kristallinen, thermoplastischen Fluorkohlenstoffharz mit einem Minimum von 38 Gew.-% Fluor besteht und die dispergierte Phase aus einem amorphen, vernetzten (vulkanisierten) Fluorelastomer mit einem Minimum von 58 Gew.-% Fluor besteht und die dispergierte Phase zwischen 50 und 90 Gew.-% der zweiphasigen Zusammensetzung ausmacht.

2. Zusammensetzung nach Anspruch 1, worin das kristalline, thermoplastische Fluorkohlenstoffharz aus der aus voll fluorierten und teilweise fluorierten, thermoplastischen Harzen bestehenden Klasse ausgewählt ist.

3. Zusammensetzung nach Anspruch 2, worin das amorphe, vernetzte Fluorkohlenstoffelastomer aus der aus voll fluorierten und teilweise fluorierten Fluorelastomeren bestehenden Klasse ausgwählt ist.

4. Verfahren zur Herstellung der zweiphasigen Zusammensetzung nach Anspruch 1 durch (a) Schmelzvermischen eines schmelzverarbeitbaren, kristallinen, thermoplastischen Fluorkohlenstoffharzes mit einem Minimum von 38 Gew.-% Fluor und eines ungehärteten, amorphen Fluorelastomers mit einem Minimum von 58 Gew.-% Fluor, (b) Vernetzen des ungehärteten Fluorelastomers durch Einführen eines oder mehrerer Härter oder Quellen freier Radikale während des Mischvorgangs und Aufrechterhalten einer Temperatur, die oberhalb des kristallinen Schmelzpunkts des Fluorkohlenstoffharzes liegt und für die Vernetzung hinreichend hoch ist.

5. Verfahren nach Anspruch 4, worin der Schmelzmischung zu Beginn des Vernetzungsschritts ein chemischer Härter zugesetzt wird.

6. Verfahren nach Anspruch 4, worin die freien Radikale während des Vernetzungsschritts generiert werden.

7. Zusammensetzung nach Anspruch 1, worin das Fluorelastomer Vinylidenfluorid/Hexafluorpropylen/Tetrafluorethylen ist.

8. Zusammensetzung nach Anspruch 7, worin das kristalline, thermoplastische Fluorkohlenstoffharz ein Tetrafluorethylen/Ethylen/Perfluorbutylethylen ist.

## Revendications

1. Une composition à deux phases comportant une phase continue et une phase dispersée, la phase continue consistant en une résine fluorocarbonée thermoplastique cristalline façonnable à l'état fondu, contenant un minimum de 38 pour cent en poids de fluor, ladite phase dispersée consistant en un élastomère fluoré réticulé (vulcanisé) amorphe contenant un minimum de 58 pour cent en poids de fluor, ladite phase dispersée constituant entre 50 et 90 pour cent en poids de la composition à deux phases.

2. La composition de la revendication 1, dans laquelle la résine fluorocarbonée thermoplastique cristalline est choisie dans la classe formée par les résines thermoplastiques totalement fluorées ou partiellement fluorées.

3. La composition de la revendication 2, dans laquelle l'élastomère fluorocarboné réticulé amorphe est

choisi dans la classe formée par les élastomères fluorés totalement fluorés ou partiellement fluorés.

4. Un procédé pour la préparation de la composition à deux phases de la revendication 1, qui consiste (a) à mélanger à l'état fondu une résine fluorocarboné thermoplastique cristalline façonnable à l'état fondu, contenant un minimum de 38 pour cent un poids de fluor, et un élastomère fluoré amorphe non durci contenant un minimum de 58 pour cent en poids de fluor, (b) à réticuler l'élastomère fluoré non durci en introduisant un ou plusieurs agents durcisseurs ou des sources de radicaux libres, tout en continuant à mélanger, et à maintenir une température qui est supérieure au point de fusion cristalline de la résine fluorocarbonée et suffisamment élevée pour provoquer une réticulation.

5. Le procédé de la revendication 4, dans laquel un agent durcisseur chimique est ajouté au mélange fondu au début de l'étape de réticulation.

6. Le procédé de la revendication 4, dans laquel les radicaux libres sont engendrés pendant l'étape de réticulation.

7. La composition de la revendication 1, dans laquelle l'élastomère fluoré est un fluorure de vinylidène/hexafluoropropylène/tétrafluoréthylène.

8. La composition de la revendication 7, dans laquelle la résine fluorocarbonée thermoplastique cristalline est un tétrafluoréthylène/éthylène/perfluorobutyléthylène.